# EUROPEAN PATENT SPECIFICATION

(11) **EP 0 543 327 B1**
(45) Date of publication and mention of the grant of the patent: **23.04.1997**
(21) Application number: 92119608.5
(22) Date of filing: 17.11.1992
(51) Int. Cl.: H04J 3/16, H04J 3/06

(54) **A synchronous optical multiplexing system**
Synchrones optisches Multiplexsystem
Système synchrone de multiplexage optique

(30) Priority: 20.11.1991 JP 304620/91
(43) Date of publication of application: 26.05.1993
(73) Proprietor: NEC CORPORATION, Tokyo (JP)
(72) Inventor: Hadano, Satoru c/o NEC CORPORATION, Tokyo (JP)
(74) Representative: VOSSIUS & PARTNER

(56) References cited:
- PHILIPS TELECOMMUNICATION REVIEW vol. 49, no. 3, 1 September 1991, HILVERSUM NL pages 31 - 37 W. BUCHHOLZ ET AL. '2.5 Gbit/s SDH transmission at 1550 nm.'
- PROCEEDINGS IEEE INTERNATIONAL CONFERENCE ON COMMUNICATIONS vol. 2, 15 April 1990, ATLANTA (US) pages 381 - 390 H. KLINGER ET AL. 'A 2.4Gbit/s synchronous optical fiber transmission system.'
- PROCEEDINGS OF THE NATIONAL COMMUNICATIONS FORUM vol. 44, no. 8/10, 1 October 1990, OAK BROOK, ILLINOIS US pages 131 - 136 GARY W. ESTER 'Sonet multivendor connectivity issues.'

## Description

This invention relates to a synchronous optical multiplexing system having an STM-m (STM: Synchronous Transport Module signal of CCITT Recommendation G.708) low speed electric signal interface according to the SDH standard in the station, and transmitting an STM-n (n = N x M) optical signal multiplexing the STM-m signals (see e.g. PHILIPS TELECOMMUNICATION REVIEW vol. 49, no. 3, 1 September 1991, HILVERSUM NL pages 31 - 37 W. BUCHHOLZ ET AL. '2.5 Gbit/s SDH transmission at 1550 nm.').

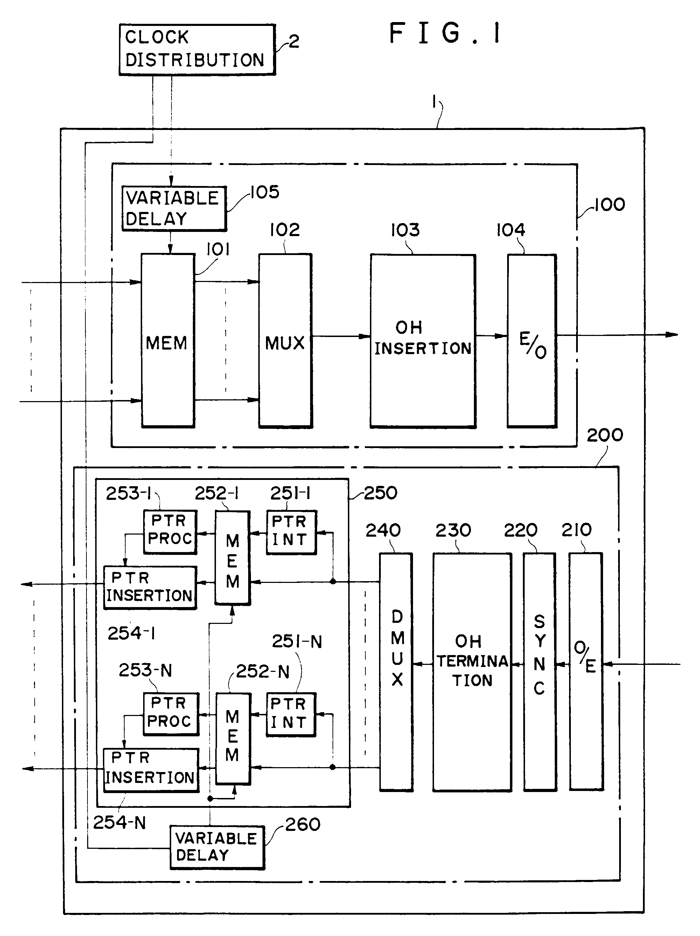

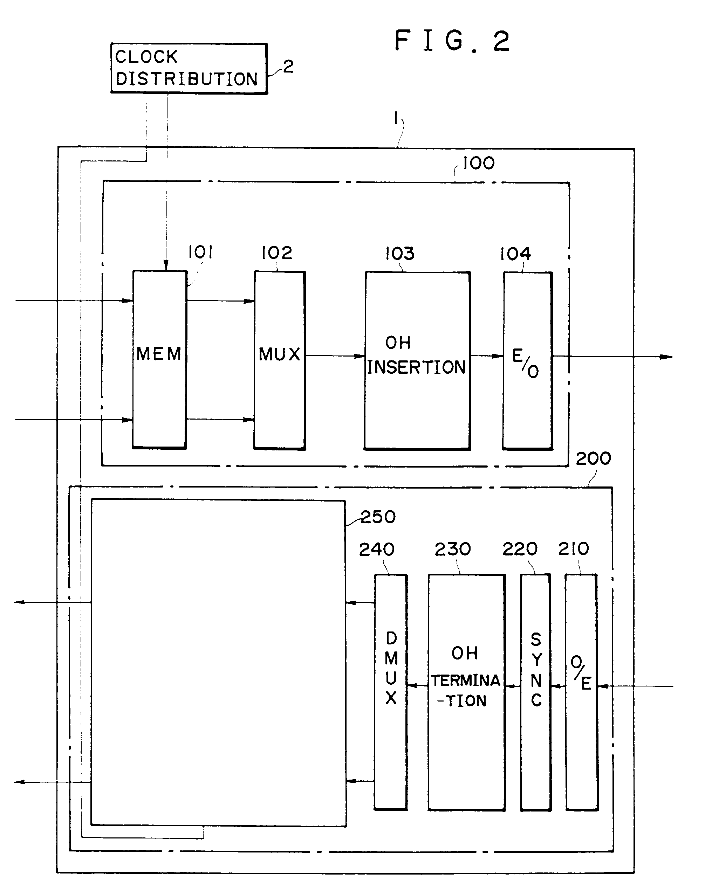

Conventionally, this kind of high speed signal interface (Fig.1, 2) of synchronous optical multiplexing station has been comprised of the transmission unit 100 and receiving unit 200. The transmission unit 100 comprises the buffer memory unit 101 to align phases of N STM-m electric signals from a slow speed signal interface unit and read by a clock and frame in the station, the multiplexing unit 102 to multiplex N STM-m electric signals outputted from the buffer memory unit to an STM-n electric signal according to a multiplexing rule of the SDH standard, the overhead insertion unit 103 to insert an overhead into the STM-n signal outputted from the multiplexing unit, and the optical transmission unit 104 to convert the STM-n electric signal in which the overhead is inserted to an STM-n optical signal and transmit it to a transmission path. The receiving unit 200 comprises the optical receiving unit 210 to convert the STM-n optical signal received from the transmission path to the STM-n electric signal, the frame synchronization unit 220 performing a frame synchronization with the STM-n electric signal, the overhead termination unit 230 to terminate the overhead of the frame-synchronized output signal of the frame synchronization unit, the demultiplexing unit 240 to demultiplex a signal outputted from the overhead termination unit into N STM-m electric signals, the pointer processing unit 250 to move N STM-m signals from a transmission path clock and frame onto a clock and frame in the station and modify pointer information to point to the practical leading portion of the data within the STM-m signals with a value aligned to the frame in the station and send out the signals to a low speed signal interface unit in the station as N STM-m electric signals.

At the buffer memory unit 101 in the transmission unit, to reduce the memory capacity, corresponding to the frame phase of the STM-m signals inputted from the low speed signal interface unit, the frame pulse inputted from the clock distribution unit 2 used as the read frame is fixedly given a delay and the write and read frames are aligned. In addition, at the pointer processing unit 250 of the receiving unit, the read frame phase is fixed by the phase decided based on the frame inputted from the clock distribution unit 2.

The reason why the low speed side electric signal interface is the SDH standard is to improve expansibilities of the station by standardizing the interface. However, the input/output frame phase of the low speed electric signal observed from the high speed signal interface unit may be changed due to the difference of the station's structures, that is the difference of the circuits which are connected to the buffer memory unit 101 and the pointer processing unit 250. If the read frame phases of the buffer memory unit 101 and the pointer processing unit 250 are fixed as a conventional embodiment, there is a problem that the high speed signal interface unit can not be used in the different station, although it can be used in the same station.

The object of this invention is to plan to generalize the high speed signal interface unit by setting the read frame phases of the high speed signal interface unit transmission side buffer memory unit and the receiving side pointer processing unit to be variable.

The synchronous optical multiplexing station of this invention comprises a transmission unit for multiplexing M STM-m low speed signals of the SDH standard to an STM-n (n = N x m) high speed signal, and a receiving unit demultiplexing an STM-n high speed signal to N STM-m low speed signals, and to achieve the above-mentioned object includes:
transmission unit having:
buffer memory unit means for aligning phases of N STM-m electric signals outputted from a low speed signal interface unit and reading by a clock and frame in the station;
first variable delay unit means for optionally varying a read frame phase of the buffer memory unit means for one frame by setting from outside with the frame phase of the STM-m electric signals inputted from the low speed signal interface unit;
multiplexing unit means for multiplexing N STM-m electric signals outputted from the buffer memory unit means to the STM-n electric signal according to the multiplexing rule of the SDH standard;
overhead insertion unit means for inserting an overhead into the STM-n signal outputted from the multiplexing unit means; and
optical transmission unit means for converting the STM-n electric signal in which the overhead is inserted to an STM-n optical signal and transmitting it to a transmission path;
said receiving unit having:
an optical receiving unit means for converting the STM-n optical signal inputted from the transmission path to the STM-n electric signal;
frame synchronization unit means for frame-synchronizing the STM-n electric signal;
overhead termination unit means for terminating the overhead of the frame-synchronized output signal of the frame synchronization unit means;
demultiplexing unit means for demultiplexing signals outputted from the overhead termination unit means to N STM-m electric signals;
pointer processing unit means for moving N STM-m signals from a transmission path clock and frame onto a clock and frame in the station, and modifying pointer information to point to the practical leading point of the data within the STM-m signals with a value aligned to the frame in the station and sending out the signals to a low speed signal interface unit in the station as N STM-m electric signals;
the second variable delay unit means for optionally varying a frame phase for one frame by setting from outside at moving the clock and frame in the pointer processing unit means.

More, it is preferable that delay quantities of the first and second variable delay units means are set by receiving a control signal from outside through a control interface.

More, it is preferable that delay quantities of the first and second variable delay units means are set by inserting an identification information into the STM-m low speed signals by the low speed signal interface unit, and detecting and identifying this at the high speed signal interface unit.

Further more, it is preferable that the pointer processing unit means is equipped with a pointer interpretation unit, a memory unit, a pointer operation unit, and a pointer insertion unit.

The invention has such an effect that it is made possible to optionally decide the read frame phase of the buffer memory for aligning a phase of N low speed signal in an input device of the high speed signal interface unit transimission side and the read frame phase of the receiving side pointer processing unit by setting of delay quantity of the variable delay unit, so that it becomes possible to use the same high speed signal interface unit and generalize the high speed signal interface unit, even though the low speed STM-m electric signal input/output frame phase of the high speed signal interface unit is differentiated by the various station's configuration.

Fig.1 illustrates a block diagram showing an embodiment of this invention.

Fig.2 illustrates a block diagram showing a conventional high speed interface unit of the synchronous signal multiplexing unit

Fig.3 illustrates a chart which shows a format of an STM-1 signal.

Fig.4 illustrates a block diagram showing a pointer processing unit 250 in the embodiment shown in Fig.1.

Fig.5, Fig.6 and Fig.7 illustrate charts to explain the pointer processing unit shown in Fig.4.

Fig.8 illustrates a block diagram showing an embodiment when controlling the variable delay unit from outside.

Fig.9 illustrates a block diagram showing an embodiment when controlling the variable delay unit automatically.

Next, the invention is described referring to following figures. Fig.1 is a block diagram showing the embodiment of the invention.

A synchronous optical multiplexing station by this invention includes the high speed signal interface unit 1 consisting of the transmission unit 100 comprising the buffer memory unit 101, the multiplexing unit 102, the overhead insertion unit 103, the optical transmission unit 104, and the first variable delay unit 105, and the receiving unit 200 comprising the optical receiving unit 210, the frame synchronization unit 220, the overhead termination unit 230, the demultiplexing unit 240, the pointer processing unit 250 and the second variable delay unit 260, and the clock distribution unit 2 distributing the reference clock and the frame pulse in the station into the station.

At the transmission unit 100 the phases of N STM-1 low speed electric signals inputted at the buffer memory unit 101 are aligned, and the N STM-1 signals are multiplexed to the STM-n signal according to the multiplexing rule of the CCITT Recommendation G.708 at the multiplexing unit 102, and the overhead is inserted into the signal at the overhead insertion unit 103 and it is converted into the STM-n optical signal at the optical transmission unit 104 and sent to the transmission path. There is no problem if the low speed electric signal is other than STM-1, but here is described presuming STM-1. The memory capacity of the buffer memory unit 101 is reduced by using the reference clock and frame in the unit 1 inputted from the clock distribution unit 2 that are aligned to the frame phase of the STM-1 low speed electric signal and optionally delayed by setting from outside at the first variable delay unit 105 as the read clock and frame of the buffer memory unit 101.

At the receiving unit 200 the STM-n optical signal inputted from the transmission path is converted into the STM-n electric signal at the optical receiving unit 210, and frame synchronization is performed at the frame synchronization unit 220, and the overhead termination is performed for the STM-n electric signal at the overhead termination unit 230. At the demultiplexing unit 240 the STM-n electric signal is demultiplexed into N STM-1 signals according to the CCITT Recommendation G. 708, and transmitted to the pointer processing unit 250. The pointer processing unit 250 includes the pointer interpretation units 251-1 to 251-N, the memory units 252-1 to 252-N, the pointer operation units 253-1 to 253-N, and the pointer insertion units 254-1 to 254-N, and inputs N STM-1 signals in parallel from the demultiplexing unit 240, and has a circuit of same configuration for each STM-1 signal. The STM-1 electric signal can be outputted from the high speed signal interface unit at optional phase as the read clock and frame of the memory unit 252-1 to 252-N of the pointer processing unit 250, by using the reference clock and frame in the unit 1 inputted from the clock distribution unit 2 that are set at optional phase by setting from outside at the second variable delay unit.

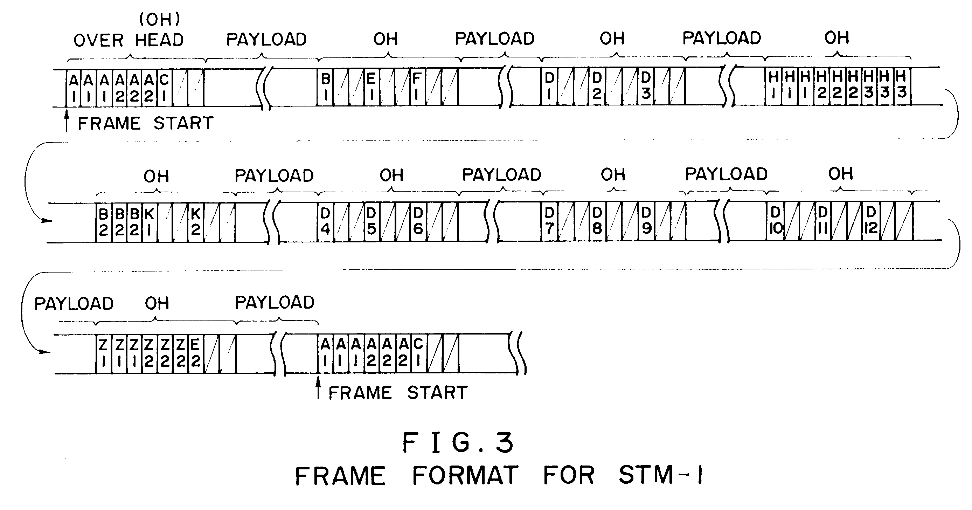

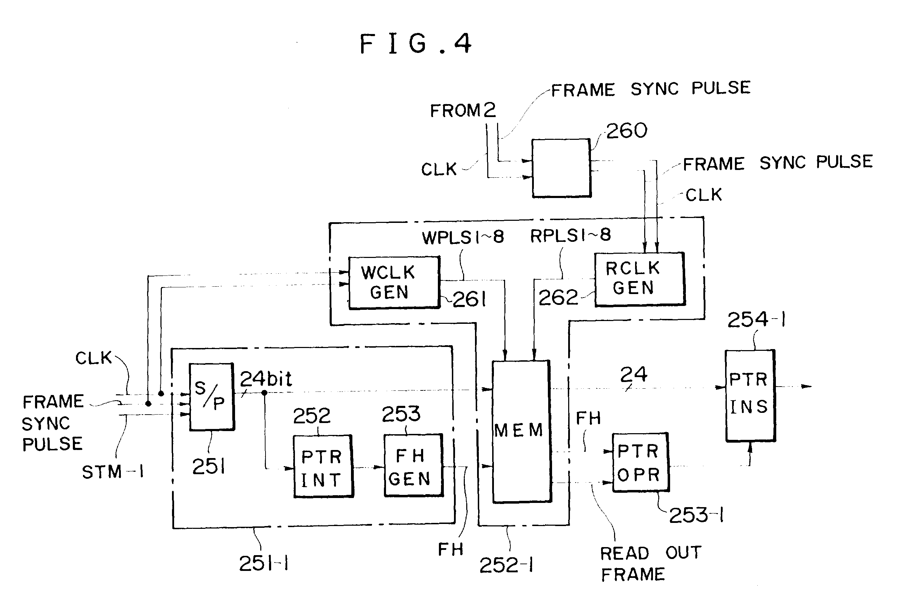

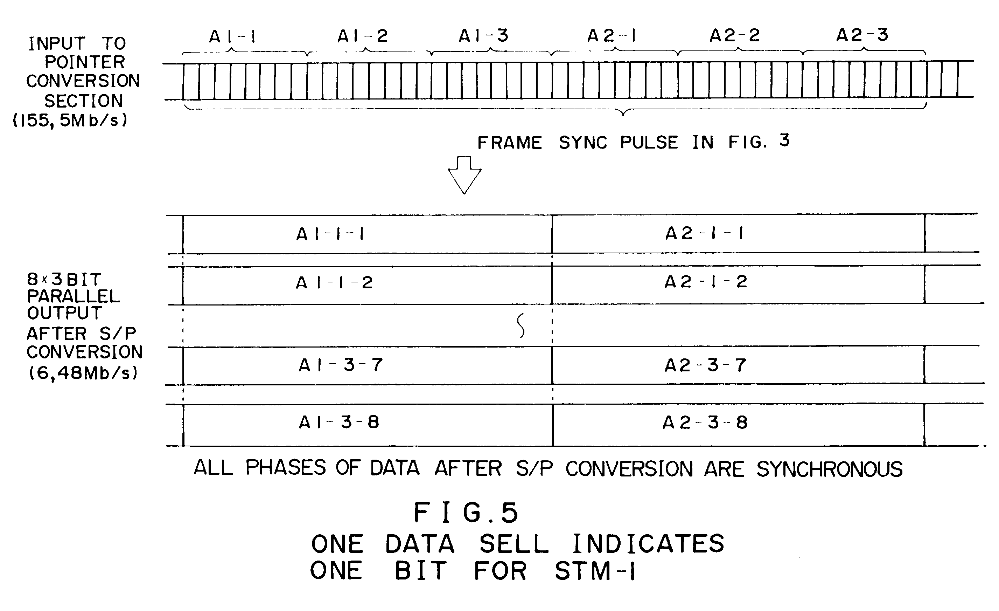

FIG.3 illustrates a frame format of an STM-1 signal. The signal rate of the STM-1 signal is 155.52 Mb/S and the frame length is 19440 bits (2430bytes). One frame consists of nine repetitions of a cycle T which consists of nine byte overhead portion and a payload portion (a framed data string having the transmission information from a terminal station). The leading nine-byte overhead of one frame signal string includes a six byte frame synchronous signal (A1, A1, A1, A2, A2, A2), and the other nine byte overhead portion contains the information regulated in CCITT Recommendation G.708. In addition, the pointers (H1, H2, H3, each three bytes) are placed into the overhead of the fourth cycle T. The pointers indicate the number of data bits from the last bit of the pointers to the frame containing the leading position of payload frame. The receiving side can then detect the frame leading position in the payload by interpreting the pointers. As shown in FIG.3, where the payload follows immediately after the last bit of the pointers, the values of the pointers indicate the bit number from the leading bit of the payload to the frame containing the leading location of the data strings.

FIG.4 illustrates the pointer interpretation unit 251-1, the memory unit 252-1, the pointer operation unit 253-1 and the pointer insertion unit 254-1 in the pointer processing unit 250. FIG.5 to FIG.7 are timing charts showing the operations of these components.

In FIG.4, the STM-1 signal, the clock signal and the frame synchronous pulse from the demultiplexing unit 240 are converted to a twenty-four bit parallel signal in the S/P (serial/parallel conversion) circuit 251. At this time, the bit rate of each parallel signal is slowed down to 6.48Mb/S (=155.52Mb/Sö24) as shown in FIG.5. The serial-parallel conversion starts when a frame synchronous pulse is inputted.

The pointer interpretation circuit 252 detects the location of the pointers H1, H2, H3 based on the parallel signal from the STM-1 signal. In the case of the STM-1 signal, it is easy to detect the pointer location because the number of bits the pointer is located from the frame synchronous pulse A1 - A3 is predetermined. The frame header(FH) generation circuit 253 detects the frames leading to the location of the data strings in the payload which follows H3 in the pointer overhead. This then generates the frame header pulse FH in the corresponding time slot. The frame header pulse FH is stored in the memory MEM and is read out by a reading clock pulse which is generated immediately after the storage operation.

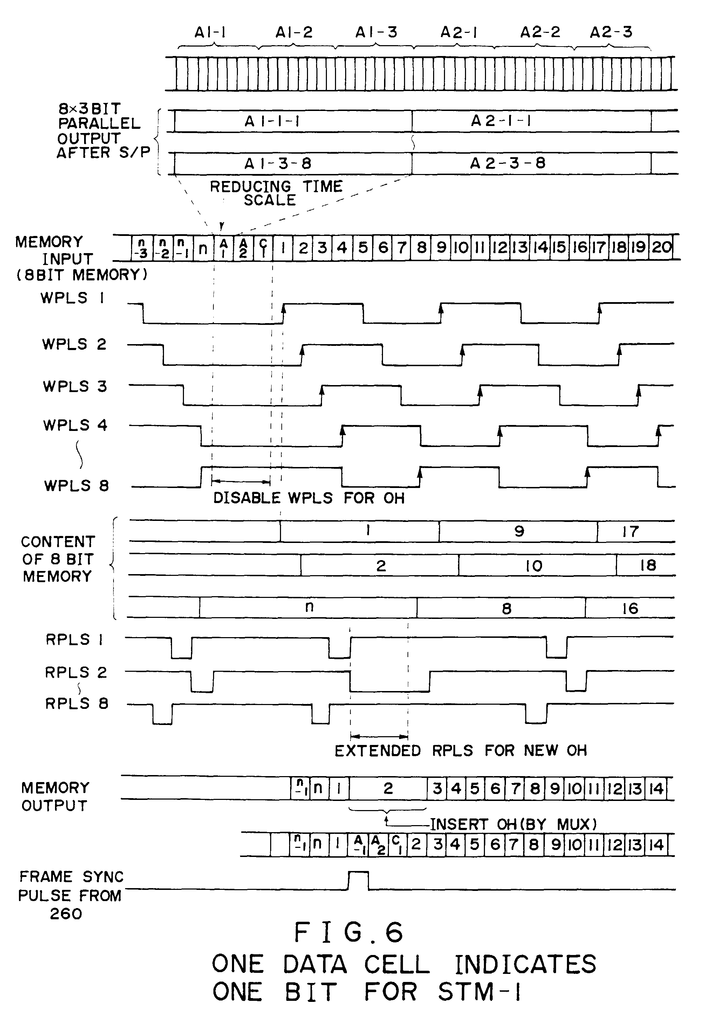

The memory MEM has twenty-four 8 bit parallel-input/parallel-output FIFO memories or registers and can temporally store twenty-four parallel signals ( refer to FIG.5 ) from the S/P circuit 251 in the corresponding MEM. This operation is performed by the writing clocks WLPS1 to WLPS8 from the writing clock generator 261 which are shown in FIG.6. While FIG.6 shows only one input of the twenty-four parallel signals, all of the twenty-four parallel signals are written in the twenty-four 8 bit parallel input/output memories by the writing clocks WLPS1 to WLPS8. The writing clocks WLPS1 to WLPS8 are not generated during the overhead (OH), but are repeatedly generated during the payload. Therefore, overhead OH is not stored in the memory MEM. Every cycle of the writing clocks WLPS1 to WLPS8 consists of 8bits, and generates while shifting by one bit. The memory MEM writes new data at every rising edge of WPLS1 to WPLS8. ( The length in which the memory can store one bit is longer than the length of the overhead.)

The readout of the memory MEM is performed at a time when either of the reading clocks RPLS1 to RPLS8 from the reading clock generator 262 are at low levels. The reading clocks RPLS1 to RPLS8 generate in synchronization with the clock signal of the second variable delay unit 260. During the overhead period, the readout period (low level) extends as long as the length of the overhead. The overhead period appears at 90 bit cycle.

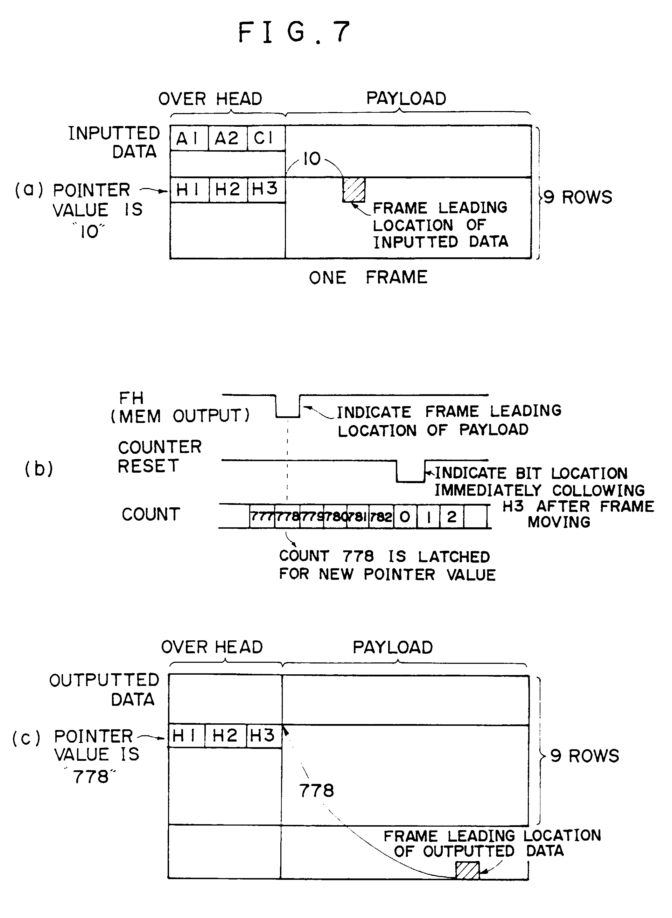

The pointer operation unit 253-1 has a counter which is reset to "0" just after detecting the location of the third pointer H3 in the pointer overhead of each frame, as determined from the readout frame (the frame synchronous pulse of the variable delay unit 260). (Refer to FIG.7). When the frame header pulse FH is supplied from the MEM, the counter value (778), which shows the frame leading location of the payload, is inserted into the pointer insertion unit 254-1 (FIG.7 (b), (c)). The output of the pointer insertion unit 254-1 has no overhead other than the pointers (FIG.7(c)), but an overhead insertion circuit (not shown in Fig.1) inserts the required overhead at location which is reserved as shown in the memory output portion of FIG.6.

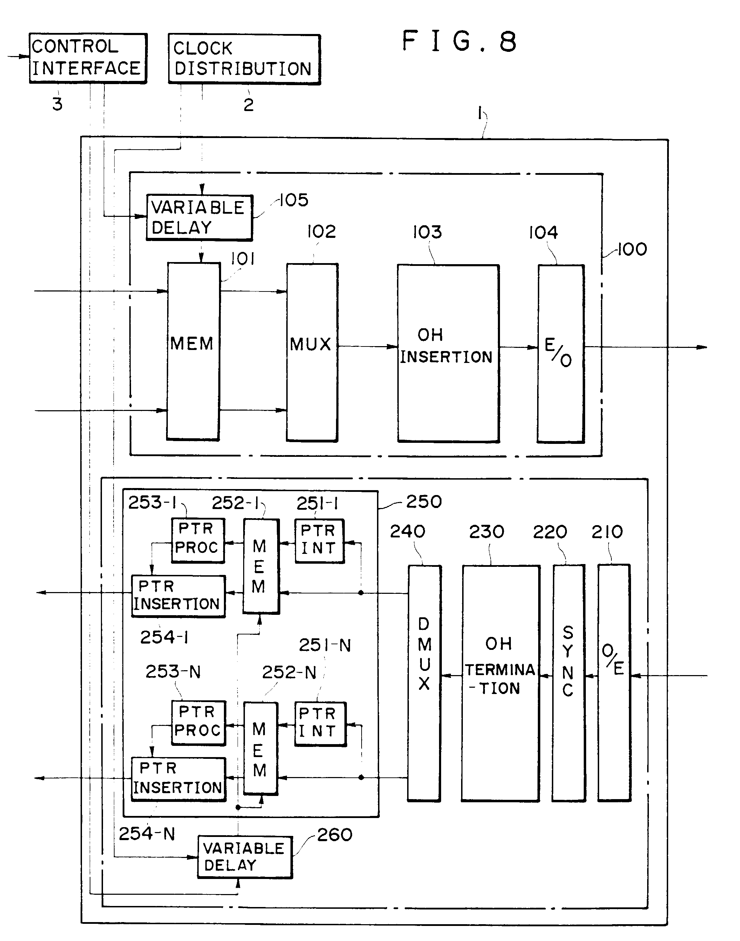

In Fig.1, the setting of delay quantity at the first variable delay unit 105 and the second variable delay unit 260 is divided into two. One is to set from outside of the unit 1 and the other is to set automatically within the unit 1. An embodiment of setting delay quantity from outside is shown in Fig.8. The setting is performed with the terminals connected with the unit 1 from outside. A control signal from the terminals is received at the control interface unit 3, and the setting of delay quantity to the first variable delay unit 105 and the second variable delay unit 260 from the control interface unit 3 according to the control signal is performed.

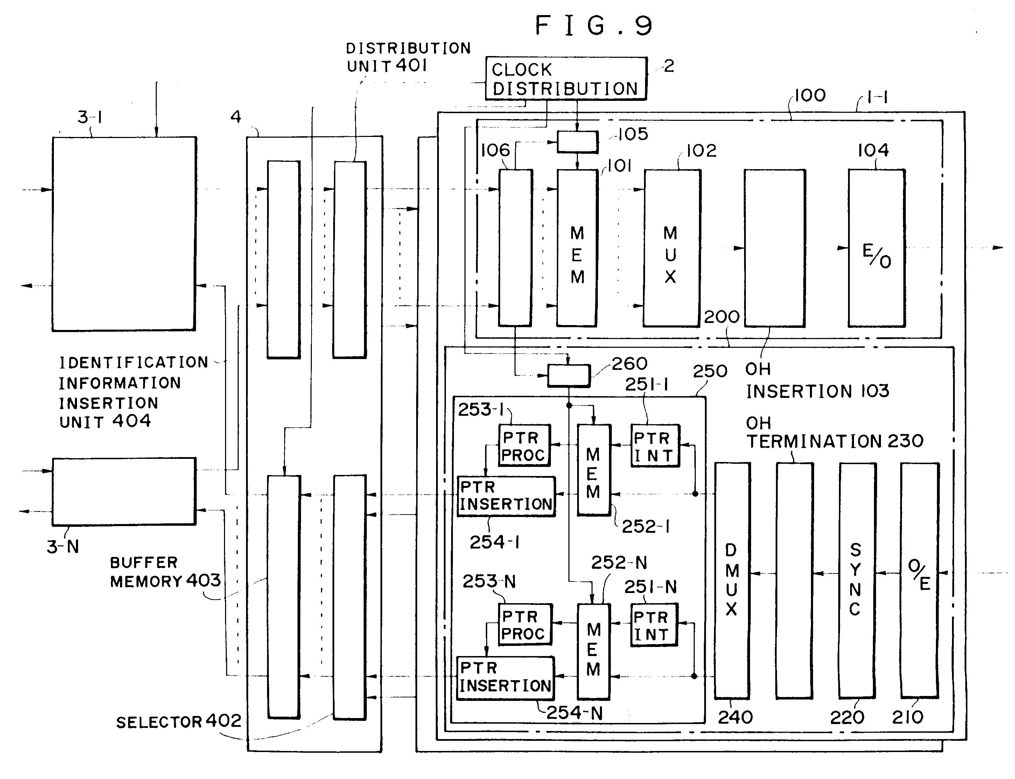

An embodiment of automatically setting delay quantity within a synchronous optical multiplexing station is shown in Fig.9. Fig.9 shows an embodiment of configuration of a multiplexing terminal station.

The station comprises a working high speed signal interface unit 1-1 and a standby interface unit 1-2, a distribution unit 4, and N lower speed signal interface units 3-1 to 3-N. The high speed signal interface units 1-1 and 1-2 have the same structure as the unit 1 of Fig.1 except a unit 106 described hereinafter. Each the lower speed signal interface units 3-1 to 3-N is a terminal unit for terminating a lower channel signal of STM-1.

The distribution unit 4 includes an identification information insertion circuit 404, distribution circuit 401, selector 402 and buffer memory 403. The distribution circuit 401 distributes the outputs from the circuit 404 to the units 1-1 and 1-2. The selector 402 selects one of the outputs from the units 1-1 and 1-2. If the working unit 1-1 is down, the selector 402 selects the output of the standby unit 1-2. Buffer memory 403 synchronizes the output from the selector 402 with the clock signal supplied from the clock distribution unit 2.

The identification information insertion unit 404 inserts identification information into overheads of the STM-1 signals which are output from the lower speed signal interface units 3-1 to 3-N. At the high speed signal interface unit 1, the identification information in the STM-1 low speed signal supplied to identification information detection unit 106 is detected, and the setting of delay quantity to the first variable delay unit 105 and the second variable delay unit 260 is automatically performed based on the detected identification information.

## Claims

1. A synchronous optical multiplexing station comprising a transmission unit (100) for multiplexing N STM-m low speed signals of the SDH standard to an STM-n (n = N x m) high speed signal, and a receiving unit (200) demultiplexing an STM-n high speed signal to N STM-m low speed signals, and having a clock distribution unit (2) to generate a clock and frame pulse in a station based on a reference clock in the station, and distribute them to units in the system, said transmission unit having:
buffer memory unit means (101) for aligning phases of N STM-m electric signals outputted from a low speed signal interface unit and reading by a clock and frame in the station;
first variable delay unit means (105) for optionally varying a read frame phase of the buffer memory unit means for one frame by setting from outside with the frame phase of the STM-m electric signals inputted from the low speed signal interface unit;
multiplexing unit means (102) for multiplexing N STM-m electric signals outputted from the buffer memory unit means to the STM-n electric signal according to the multiplexing rule of the SDH standard;
overhead insertion unit means (103) for inserting an overhead into the STM-n signal outputted from the multiplexing unit means; and
optical transmission unit means (104) for converting the STM-n electric signal in which the overhead is inserted to an STM-n optical signal and transmitting it to a transmission path;
said receiving unit (200) having:
an optical receiving unit means (210) for converting the STM-n optical signal inputted from the transmission path to the STM-n electric signal;
frame synchronization unit means (220) for frame-synchronizing the STM-n electric signal;
overhead termination unit means (230) for terminating the overhead of the frame-synchronized output signal of the frame synchronization unit means;
demultiplexing unit means (240) for demultiplexing signals outputted from the overhead termination unit means to N STM-m electric signals;
pointer processing unit means (250) for moving N STM-m signals from a transmission path clock and frame onto a clock and frame in the station, and modifying pointer information to point to the practical leading point of the data within the STM-m signals with a value aligned to the frame in the station and sending out the signals to a low speed signal interface unit in the station as N STM-m electric signals;
second variable delay unit means (260) for optionally varying a frame phase for one frame by setting from outside at moving the clock and frame in the pointer processing unit means.

2. A synchronous optical multiplexing station as set forth in claim 1, characterized in that delay quantities of the first and second variable delay units means are set by receiving a control signal from outside through a control interface.

3. A synchronous optical multiplexing station as set forth in claim 1 or 2,characterized in that delay quantities of the first and second variable delay units means are set by inserting an identification information into the STM-m low speed signals by the low speed signal interface unit, and detecting and identifying this at the high speed signal interface unit.

4. A synchronous optical multiplexing station as set forth in claim 1, 2, or 3, characterized in that the pointer processing unit means is equipped with a pointer interpretation unit, a memory unit, a pointer operation unit, and a pointer insertion unit.

5. A synchronous optical multiplexing station comprising a transmissision unit (100) composed of the buffer memory unit (101), a multiplexing unit (102), an overhead insertion unit (103), an optical transmission unit (104) and a first variable delay unit (105), wherein the receiving unit (200) is composed of an optical receiving unit (210), a frame synchronization unit (220), an overhead termination unit (230), a demultiplexing unit (240), a pointer processing unit (250) and a second variable delay unit (260), and a clock distribution unit (2), and wherein the read frame phase of the transmission side buffer memory unit is variable in the high speed signal interface unit and the read frame phases of the receiving side pointer processing unit by varying the reference clock and frame in the station inputted from the clock distribution unit (2) using the amount of delay of the first variable delay unit (105) and the second variable delay unit (260).

## Patentansprüche

1. Synchrone optische Multiplexstation mit einer Sendeeinheit (100) zum Multiplexen von N niedrigratigen STM-m-Signalen des SDH-Standards in ein hochratiges STM-n-Signal (n = N x m) und einer Empfangseinheit (200) zum Demultiplexen eines hochratigen STM-n-Signals in N niedrigratige STM-m-Signale sowie mit einer Taktverteilungseinheit (2) zum Erzeugen eines Takt- und Rahmenimpulses in einer Station auf der Grundlage eines Referenztakts in der Station und zu ihrer Verteilung zu Einheiten in dem System,
wobei die Sendeeinheit aufweist:
eine Pufferspeichereinheit-Einrichtung (101) zum Abgleichen von Phasen von N elektrischen STM-m-Signalen, die von einer niedrigratigen Signalschnittstelleneinheit ausgegeben werden, und Auslesen durch einen Takt und Rahmen in der Station;
eine erste variable Verzögerungseinheit-Einrichtung (105) zum optionalen Variieren einer Leserahmenphase der Pufferspeichereinheit-Einrichtung um einen Rahmen durch Einstellen von außen mit der Rahmenphase der elektrischen STM-m-Signale, die von der niedrigratigen Signalschnittstelleneinheit eingegeben werden;
eine Multiplexeinheit-Einrichtung (102) zum Multiplexen von N elektrischen STM-m-Signalen, die von der Pufferspeichereinheit-Einrichtung ausgegeben werden, in das elektrische STM-n-Signal nach der Multiplexregel des SDH-Standards;
eine Kopfteileinfügeeinheit-Einrichtung (103) zum Einfügen eines Kopfteils in das STM-n-Signal, das von der Multiplexeinheit-Einrichtung ausgegeben wird; und
eine optische Sendeeinheit-Einrichtung (104) zum Umwandeln des elektrischen STM-n-Signals, in das der Kopfteil eingefügt ist, in ein optisches STM-n-Signal und zu seinem Senden zu einem Übertragungsweg;
wobei die Empfangseinheit (200) aufweist:
eine optische Empfangseinheit-Einrichtung (210) zum Umwandeln des optischen STM-n-Signals, das von dem Übertragungsweg eingegeben wird, in das elektrische STM-n-Signal;
eine Rahmensynchronisationseinheit-Einrichtung (220) zum Rahmensynchronisieren des elektrischen STM-n-Signals; eine Kopfteillöscheinheit-Einrichtung (230) zum Löschen des Kopfteils des rahmensynchronisierten Ausgabesignals der Rahmensynchronisationseinheit-Einrichtung;
eine Demultiplexeinheit-Einrichtung (240) zum Demultiplexen von Signalen, die von der Kopfteillöscheinheit-Einrichtung ausgegeben werden, in N elektrische STM-m-Signale;
eine Zeigerverarbeitungseinheit-Einrichtung (250) zum Bewegen von N STM-m-Signalen von einem Übertragungswegtakt und -rahmen zu einem Takt und Rahmen in der Station und Modifizieren von Zeigerinformationen, um auf den praktischen führenden Punkt der Daten innerhalb der STM-m-Signale mit einem Wert zu zeigen, der mit dem Rahmen in der Station abgeglichen ist, und Aussenden der Signale zu einer niedrigratigen Signalschnittstelleneinheit in der Station als N elektrische STM-m-Signale; eine zweite variable Verzögerungseinheit-Einrichtung (260) zum optionalen Variieren einer Rahmenphase um einen Rahmen durch Einstellen von außen bei Bewegen des Takts und Rahmens in der Zeigerverarbeitungseinheit-Einrichtung.

2. Synchrone optische Multiplexstation nach Anspruch 1, dadurch gekennzeichnet, daß Verzögerungsgrößen der ersten und zweiten variablen Verzögerungseinheit-Einrichtung durch Empfangen eines Steuersignals von außen über eine Steuerschnittstelle eingestellt werden.

3. Synchrone optische Multiplexstation nach Anspruch 1 oder 2, dadurch gekennzeichnet, daß Verzögerungsgrößen der ersten und zweiten variablen Verzögerungseinheit-Einrichtung durch Einfügen einer Kennungsinformation in die niedrigratigen STM-m-Signale durch die niedrigratige Signalschnittstelleneinheit und Detektieren und Identifizieren derselben in der hochratigen Signalschnittstelleneinheit eingestellt werden.

4. Synchrone optische Multiplexstation nach Anspruch 1, 2 oder 3, dadurch gekennzeichnet, daß die Zeigerverarbeitungseinheit-Einrichtung mit einer Zeigerinterpretationseinheit, einer Speichereinheit, einer Zeigerbetriebseinheit und einer Zeigereinfügeeinheit ausgerüstet ist.

5. Synchrone optische Multiplexstation mit einer Sendeeinheit (100), die sich aus der Pufferspeichereinheit (101), einer Multiplexeinheit (102), einer Kopfteileinfügeeinheit (103), einer optischen Sendeeinheit (104) und einer ersten variablen Verzögerungseinheit (105) zusammensetzt, wobei sich die Empfangseinheit (200) aus einer optischen Empfangseinheit (210), einer Rahmensynchronisationseinheit (220), einer Kopfteillöscheinheit (230), einer Demultiplexeinheit 240, einer Zeigerverarbeitungseinheit (250) und einer zweiten variablen Verzögerungseinheit (260) zusammensetzt, sowie einer Taktverteilungseinheit (2), wobei die Leserahmenphase der sendeseitigen Pufferspeichereinheit in der hochratigen Signalschnittstelleneinheit sowie die Leserahmenphasen der empfangsseitigen Zeigerverarbeitungseinheit variabel sind, indem der Referenztakt und -rahmen in der Station, die von der Taktverteilungseinheit (2) eingegeben werden, unter Verwendung der Verzögerungsgröße der ersten variablen Verzögerungseinheit (105) und der zweiten variablen Verzögerungseinheit (260) variiert werden.

## Revendications

1. Poste de multiplexage optique synchrone, comprenant une unité de transmission (100) pour multiplexer N signaux lents STM-m de la norme SDH en un signal rapide STM-n (n = N x m) et une unité de réception (200) démultiplexant un signal rapide STM-n en N signaux lents STM-m, et ayant une unité de distribution d'impulsions d'horloge (2) pour générer des impulsions d'horloge et de trame dans un poste, basées sur une impulsion d'horloge de référence dans le poste, et les distribuer à des unités dans le système, ladite unité de transmission ayant :
- des moyens d'unité de mémoire tampon (101) pour aligner les phases de N signaux électriques STM-m sortis d'une unité d'interface de signaux lents et les lire selon des impulsions d'horloge et de trame dans le poste;
- des premiers moyens d'unité de retard variable (105) pour, facultativement, faire varier une phase d'une trame de lecture des moyens d'unité de mémoire tampon pour une trame, en réglant depuis l'extérieur la phase d'une trame des signaux électriques STM-m rentrés depuis l'unité d'interface de signaux lents;
- des moyens d'unité de multiplexage (102) pour multiplexer N signaux électriques STM-m sortis des moyens d'unité de mémoire tampon en le signal électrique STM-n suivant la règle de multiplexage de la norme SDH;
- des moyens d'unité d'insertion de servitude (103) pour insérer une servitude dans le signal STM-n sorti des moyens d'unité de multiplexage; et
- des moyens d'unité de transmission optique (104) pour convertir le signal électrique STM-n dans lequel la servitude est insérée en un signal optique STM-n et le transmettre à un trajet de transmission;
ladite unité de réception (200) ayant :
- des moyens d'unité de réception optique (210) pour convertir le signal optique STM-n rentré depuis le trajet de transmission en le signal électrique STM-n;
- des moyens d'unité de synchronisation de trame (220) pour synchroniser la trame du signal électrique STM-n;
- des moyens d'unité de terminaison de servitude (230) pour terminer la servitude du signal de sortie synchronisé en trame des moyens d'unité de synchronisation de trame;
- des moyens d'unité de démultiplexage (240) pour démultiplexer les signaux sortis des moyens d'unité de terminaison de servitude en N signaux électriques STM-m;
- des moyens d'unité de traitement de pointeurs (250) pour déplacer N signaux STM-m depuis des impulsions d'horloge et de trame d'un trajet de transmission sur des impulsions d'horloge et de trame dans le poste, et modifier une information de pointeur pour indiquer le point de tête pratique des données dans les signaux STM-m avec une valeur alignée sur la trame dans le poste, et envoyer les signaux vers une unité d'interface de signaux lents dans le poste en tant que N signaux électriques STM-m; et
- des seconds moyens d'unité de retard variable (260) pour, facultativement, faire varier une phase d'une trame pour une trame, en réglant depuis l'extérieur le déplacement des impulsions d'horloge et de trame dans les moyens d'unité de traitement de pointeurs.

2. Poste de multiplexage optique synchrone tel que défini dans la revendication 1, caractérisé en ce que des montants du retard des premiers et seconds moyens d'unités de retard variable sont réglés par la réception d'un signal de commande depuis l'extérieur, par l'intermédiaire d'une interface de commande.

3. Poste de multiplexage optique synchrone tel que défini dans la revendication 1 ou 2, caractérisé en ce que des montants du retard des premiers et seconds moyens d'unités de retard variable sont réglés par l'insertion d'une information d'identification dans les signaux lents STM-m par l'unité d'interface de signaux lents, et la détection et l'identification de celle-ci à l'unité d'interface de signaux rapides.

4. Poste de multiplexage optique synchrone tel que défini dans la revendication 1, 2 ou 3, caractérisé en ce que les moyens d'unité de traitement de pointeurs sont munis d'une unité d'interprétation de pointeurs, d'une unité de mémoire, d'une unité d'opération de pointeur et d'une unité d'insertion de pointeur.

5. Poste de multiplexage optique synchrone, comprenant une unité de transmission (100) composée d'une unité de mémoire tampon (101), d'une unité de multiplexage (102), d'une unité d'insertion de servitude (103), d'une unité de transmission optique (104) et d'une première unité de retard variable (105), dans lequel une unité de réception (200) est composée d'une unité de réception optique (210), d'une unité de synchronisation de trame (220), d'une unité de terminaison de servitude (230), d'une unité de démultiplexage (240), d'une unité de traitement de pointeurs (250) et d'une seconde unité de retard variable (260), et une unité de distribution d'impulsions d'horloge (2), et dans lequel la phase d'une trame de lecture de l'unité de mémoire tampon du côté de transmission est variable dans l'unité d'interface de signaux rapides et les phases de trames de lecture de l'unité de traitement de pointeurs du côté de réception en faisant varier les impulsions d'horloge et de trame de référence dans le poste, rentrées depuis l'unité de distribution d'impulsions d'horloge (2), en utilisant le montant du retard de la première unité de retard variable (105) et de la seconde unité de retard variable (260).
